# EUROPÄISCHE PATENTSCHRIFT

(11) **EP 3 488 117 B1**
(45) Veröffentlichungstag und Bekanntmachung des Hinweises auf die Patenterteilung: **10.06.2020**
(21) Anmeldenummer: 16750640.1
(22) Anmeldetag: 20.07.2016
(51) Int. Cl.: F16D 23/12

(54) **AKTUATORANORDNUNG UND KUPPLUNGSANORDNUNG**
ACTUATOR ARRANGEMENT AND CLUTCH ARRANGEMENT
ENSEMBLE ACTIONNEUR ET ENSEMBLE EMBRAYAGE

(43) Veröffentlichungstag der Anmeldung: 29.05.2019
(73) Patentinhaber: GKN Automotive Limited, Birmingham, West Midlands B37 7YE (GB)
(72) Erfinder: RUPP, Waldemar, 50354 Hürth (DE)
(74) Vertreter: Neumann Müller Oberwalleney & Partner Patentanwälte
(86) Internationale Anmeldenummer: PCT/EP2016/067314
(87) Internationale Veröffentlichungsnummer: WO 2018/014950

(56) Entgegenhaltungen:
- EP-A2- 1 790 870
- FR-A1- 2 993 949
- US-A1- 2005 279 601

## Beschreibung

Die Erfindung betrifft eine Aktuatoranordnung zur Betätigung einer Kupplung, insbesondere für den Antriebsstrang eines Kraftfahrzeugs. Die Erfindung betrifft ferner eine Kupplungsanordnung mit einer solchen Aktatoranordnung für ein Kraftfahrzeug. Eine solche Kupplungsanordnung ist zum bedarfsweisen Zu- oder Abschalten eines optional antreibbaren Antriebsstrangs vorgesehen, die von dem steuerbaren Aktuator betätigbar ist.

Antriebskonzepte mit bedarfsweise zuschaltbarer beziehungsweise abschaltbarer Antriebsachse werden auch als "Hang-on", "On-demand" oder "Disconnect"-Systeme bezeichnet. Es werden insbesondere folgende Antriebskonzepte bei Kraftfahrzeugen unterschieden. Kraftfahrzeuge mit Frontmotor, bei denen die Vorderachse permanent angetrieben wird und die Hinterachse bedarfsweise zuschaltbar ist. Weiter gibt es Kraftfahrzeuge mit Frontmotor, bei denen die Hinterachse permanent angetrieben ist und die Vorderachse bedarfsweise zuschaltbar ist. Schließlich sind Kraftfahrzeuge mit Heckmotor bekannt, bei denen die Hinterachse permanent angetrieben ist und die Vorderachse mittels einer Hang-on Kupplung bedarfsweise zugeschaltet wird.

Aus der DE 10 2008 011 910 A1 ist eine Vorspanneinheit für ein Getriebe eines Kraftfahrzeugs bekannt, welche die Betätigung einer Reibungskupplung im Antriebsstrang des Kraftfahrzeugs zu ermöglichen. Die Vorspanneinheit umfasst eine erste Rampenscheibe, einen ringförmigen Käfig mit über dem Umfang verteilten axialen Öffnungen, in denen Wälzkörper aufgenommen sind, eine zweite Rampenscheibe mit umfangsverteilten Rampenkonturen sowie ein Axiallager. Die Rampenscheiben und der Käfig sind formschlüssig axial aneinander gehalten.

Aus der WO 2015 120909 A1, welche die Merkmale des Oberbegrifft offenbart, ist eine Kupplungsanordnung für den Antriebsstrang eines Kraftfahrzeugs bekannt. Die Kupplungsanordnung umfasst eine Kupplung, die eine erste Welle und eine zweite Welle antriebsmäßig verbinden oder trennen kann, eine Bremse, mit der die zweite Welle gegenüber einem ortsfesten Bauteil abbremsbar ist, und eine Betätigungsvorrichtung, mit der die Kupplung und die Bremse derart betätigbar sind, dass die Bremse erst betätigt wird, wenn die Kupplung zumindest teilweise geöffnet ist. Die Betätigungsvorrichtung umfasst einen Elektromotor und eine Rampenanordnung.

Es sind elektromotorisch betätigte Rampenanordnungen bekannt. Die Auslegung des Elektromotors zur Betätigung der Rampenanordnung hängt unter anderem von den inneren Reibungskräften der Rampenanordnung ab.

Der vorliegenden Erfindung liegt die Aufgabe zugrunde, eine Aktuatoranordnung zur Betätigung einer Kupplung vorzuschlagen, die einfach und kompakt aufgebaut ist und besonders reibungsarm funktioniert. Die Aufgabe liegt weiter darin, eine steuerbare Kupplungsanordnung mit einer solchen Aktuatoranordnung vorzuschlagen, die nur geringe Betätigungskräfte benötigt.

Eine Lösung besteht in einer Aktuatoranordnung zur Betätigung einer Kupplung im Antriebsstrang eines Kraftfahrzeugs, umfassend: eine Antriebseinheit zum Erzeugen einer Betätigungskraft und eine Rampeneinheit, die von der Antriebseinheit antreibbar ist und ausgestaltet ist, um eine Drehbewegung in eine translatorische Bewegung umzuwandeln; wobei die Rampeneinheit ein Anlaufelement, einen ersten Ring und einen zweiten Ring aufweist; wobei der erste Ring von der Antriebseinheit um eine Drehachse drehend antreibbar ist und mehrere über den Umfang verteilte axiale Durchgangsöffnungen aufweist, wobei in jeder der axialen Durchgangsöffnungen zwei Rollen angeordnet sind, die aneinander axial abgestützt sind und in Wälzkontakt miteinander stehen, von denen jeweils eine erste Rolle gegen das Anlaufelement axial abgestützt ist und eine zweite Rolle gegen den zweiten Ring axial abgestützt ist; wobei der zweite Ring ausgestaltet ist, um in einem ortfesten Bauteil drehfest und axial beweglich gehalten zu werden und mehrere über den Umfang verteilte Rampenkonturen aufweist, die jeweils mit einer zugehörigen zweiten Rolle zusammenwirken; wobei die Rampenkonturen derart gestaltet sind, dass ein drehendes Antreiben des drehend antreibbaren ersten Rings mittels der Antriebseinheit eine axiale Bewegung des zweiten Rings relativ zum ersten Ring bewirkt.

Ein Vorteil der erfindungsgemäßen Aktuatoranordnung ist, dass der zweite Ring über die Rollen an dem Anlaufelement axial abgestützt und gegenüber dieser drehbar gelagert ist. Die Rollen wirken dabei als axiales Wälzlager, so dass aufgrund des abwälzenden Kontakts besonders geringe Reibungskräfte und damit nur geringe Reibungsverluste der Anordnung gegeben sind. Aufgrund der geringen Reibungskräfte kann auch die Antriebseinheit entsprechend mit geringer Nennleistung dimensioniert werden, was sich insgesamt günstig auf den benötigten Bauraum und das Gewicht auswirkt. Ein separates Axiallager zur axialen Abstützung des ersten Ringes ist nicht erforderlich. Der erste Ring hat die Funktion eines Käfigs, in dem die Rollkörper drehbar aufgenommen sind. Der erste Ring nimmt an der axialen Kraftübertragung nicht teil, sondern überträgt lediglich eine von der Antriebsquelle eingeleitete Drehbewegung auf die Rollkörper. Bei Betätigen der Rampenanordnung, das heißt Verdrehen des ersten Rings, wälzen die ersten Rollenkörper an dem Anlaufelement ab, die zweiten Rollenkörper an den Rampen des zweiten Rings und beide Rollen gegeneinander ab. Das Anlaufelement hat insbesondere eine ebene, radiale Stützfläche, gegen welche die ersten Rollenkörper axial abgestützt sind. Das Anlaufelement kann hierbei eine separate Anlaufscheibe sein, die in einem Kupplungsgehäuse oder Getriebegehäuse gehalten ist. Alternativ kann das Kupplungsgehäuse oder Getriebegehäuse selbst das Anlaufelement sein beziehungsweise dieses ausbilden. Eine separate Anlaufscheibe, zum Beispiel aus einem Stahlwerkstoff, wird insbesondere dann vorteilhaft sein, wenn das Kupplungsgehäuse oder Getriebegehäuse aus einem Aluminiumwerkstoff hergestellt ist.

Je Tasche sind vorzugsweise genau zwei Rollkörper vorgesehen, so dass der zweite Ring und das Anlaufelement im Drehsinn ortsfest zueinander bleiben, das heißt keine Drehbewegung relativ zueinander ausführen. Insgesamt erfüllt die Aktuatoranordnung eine Doppelfunktion, nämlich die eines axialen Wälzlagers und die eines Rotations-Translations-Wandlers, wobei die Anordnung gleichzeitig einen einfachen und kompakten Aufbau hat.

Die beiden Ringe sind insbesondere axial benachbart zueinander angeordnet. Vorzugsweise hat der zweite Ring zumindest drei Rampen über den Umfang verteilt, an denen jeweils ein Rollkörper axial abgestützt ist. Hierdurch ergibt sich eine gute Führung und Abstützung des zweiten Rings an dem Anlaufelement. Die zumindest drei Rampen erstrecken sich jeweils über weniger als 120° um die Drehachse. Es können auch mehr als drei Rampen vorgesehen sein, wie vier, fünf oder mehr. Mit zunehmender Anzahl von Rollkörpern und entsprechend zunehmender Anzahl von Rampen nimmt die individuelle Flächenbelastung ab. Ebenso verkürzt sich die Umfangserstreckung der einzelnen Rampen.

Nach einer Ausführungsform sind die Rampen des zweiten Rings so gestaltet, dass eine erste Endstellung definiert ist, in der zweite Ring an den ersten Ring axial angenähert ist, und eine zweite Endstellung, in welcher der zweite Ring vom ersten Ring axial weiter entfernt ist. Zumindest eine der beiden Endstellungen, das heißt die erste Endstellung und/oder die zweite Endstellung, kann durch entsprechende Gestaltung der Rampenkontur realisiert werden, beispielsweise mittels einer Rastausnehmung, in welche der zugehörige zweite Rollenkörper eine definierte Stellung einnimmt.

Die Rampenkonturen des zweiten Rings können weiter so gestaltet sein, dass entlang des relativen Verdrehweges zwischen der ersten Endstellung und der zweiten Endstellung eine dazwischen liegende Zwischenposition vorgesehen ist, derart, dass der zweite Ring in der Zwischenposition in einem definierten axialen Abstand relativ zum ersten Ring gehalten wird. Dies soll insbesondere auch gelten, wenn die Antriebseinheit deaktiviert ist. Der Vorteil besteht darin, dass der Zwischenposition der Rampeneinheit eine bestimmte Funktion zugeordnet werden kann, welche ohne externen Kraftaufwand gehalten werden kann.

Vorzugsweise weisen die Rampen des zweiten Rings jeweils einen ersten Abschnitt mit einer ersten Steigung und einen zweiten Abschnitt mit einer zweiten Steigung auf, wobei insbesondere vorgesehen ist, dass zwischen dem ersten Abschnitt und dem zweiten Abschnitt ein vertiefter Zwischenabschnitt gebildet ist, der die Zwischenposition definiert. Die Steigungen des ersten Abschnitts und des zweiten Abschnitts sind prinzipiell frei wählbar und können entsprechend den technischen Anforderungen gestaltet werden. Insbesondere kann die Steigung des ersten Abschnitts kleiner, größer oder gleich der Steigung des zweiten Abschnitts sein. Es ist auch möglich, dass zumindest einer der Abschnitte, das heißt der erste und/oder der zweite Abschnitt der jeweiligen Rampe, eine variable Steigung über dem Umfang hat. Der Zwischenabschnitt kann in einer alternativen Ausgestaltung auch einen geraden Verlauf ohne Steigung aufweisen. Hierdurch wird der Kraftaufwand verringert, der erforderliche ist, um den zweiten Ring zu verdrehen, wenn die Zwischenposition verlassen werden soll. Insbesondere, wenn die Antriebseinheit und die weiteren Elemente eine ausreichende Reibung aufweisen, um ein unbeabsichtigtes Verdrehen in der Zwischenposition durch Fahrzeugvibrationen zu verhindern, kann ein Zwischenabschnitt ohne Steigung bereits ausreichen.

Die Rampen können im Bereich der ersten Endstellung, das heißt der angenäherten Stellung, einen steigenden Auslauf aufweisen. Durch einen steigenden Auslauf wird ein weiteres Verdrehen des zweiten rings relativ zum ersten Ring über die Endstellung hinaus in einem begrenzten Maße ermöglicht, so dass die gesamte drehende Masse der Antriebseinheit beim Überschwingen über die Endlage abgefedert wird. Die Steigung und Umfangslänge des Auslaufs ist so gestaltet, dass - bei Verwendung des Aktuators zum Beaufschlagen einer Kupplung im Schließsinne - die Kupplung in der Schließstellung bleibt, auch wenn die Kugeln in diesen Bereich hineinlaufen und sich die beiden Ringe wieder geringfügig voneinander axial entfernen.

Nach einer bevorzugten Ausführungsform sind die ersten und zweiten Rollen in Form von Zylinderrollen gestaltet. Es ist jedoch auch denkbar, dass die ersten und zweiten Rollen ballig ausgebildet sind oder in Form von Kegelrollen gestaltet sind. Jeweils zwei Zylinderrollen bilden gemeinsam ein Paar, das in einer der Durchgangsöffnungen des ersten Rings einsitzt. Dabei sind die Zylinderrollen insbesondere axial benachbart zueinander in einer gemeinsamen Längsebene angeordnet. Die erste Rolle ist um eine erste Rollenachse drehbar und die zweite Rolle ist um eine zweite Rollenachse drehbar, wobei die erste und zweite Rollenachse parallel zueinander und jeweils radial zur Drehachse des ersten Rings verlaufen. Entsprechend der Zylinderform der Rollenkörper können die Rampen in Form von ebenen Rampenflächen gestaltet sein, an denen die zweiten Rollenkörper jeweils axial abgestützt und abwälzend in Kontakt sind.

Nach einer ersten Möglichkeit können die ersten und die zweiten Rollenkörper jeweils lose mit Spiel in den Durchgangsöffnungen angeordnet sein. Vorzugsweise wäre das Radialspiel und Spiel in Umfangsrichtung möglichst klein zu halten, um ungewünschte Geräusche zu vermeiden. Nach einer zweiten Möglichkeit könnte je Paar zumindest eine der ersten und zweiten Rolle in der zugehörigen Durchgangsöffnung mittels eines Lagers um die Rollenachse drehbar gelagert sein. Hierfür könnte der Rollenkörper an seinen axialen Enden entsprechende Lagerzapfen aufweisen, welche in entsprechenden radialen Ausnehmungen des ersten Ringes drehbar aufzunehmen wären.

Nach einer Ausgestaltung kann der erste Ring an seiner dem Anlaufelement zugewandten Seite eine ebene Radialfläche haben, wobei die ersten Rollen in montiertem Zustand gegenüber dieser Radialfläche axial vorstehen. Alternativ oder in Ergänzung kann der erste Ring an seiner dem zweiten Ring zugewandten Seite mehrere axiale Erhebungen aufweisen, in denen jeweils eine der Durchgangsöffnungen vorgesehen ist. Mit anderen Worten können die Aufnahmekammern für die Rollkörper in entsprechenden über den Umfang verteilten Lagerbereichen ausgebildet sein, welche sich in Richtung zum zweiten Ring erstrecken. Diese Lagerbereiche stehen gegenüber einer insbesondere ebenen Radialfläche des zweiten Ringes axial hervor. Für eine einfache Montierbarkeit kann vorgesehen sein, dass sich die Aufnahmeräume für die Rollenkörper zu einem axialen Ende hin verjüngen, so dass die Rollenkörper zwar über das axiale Ende der Lagerbereiche überstehen, aber nicht aus diesen herausfallen können.

Es ist vorgesehen, dass der erste Ring von der Antriebseinheit um die Drehachse drehend antreibbar ist, während der zweite Ring verdrehgesichert und axial verschiebbar ist. Die Verdrehsicherung kann beispielsweise gegenüber einem ortsfesten Gehäuse erfolgen, in den die Rampeneinheit eingebaut wird. Zur Verdrehsicherung kann der zweite Ring geeignete Verdrehsicherungselemente aufweisen, beispielsweise mehrere radiale Vorsprünge, um den zweiten Ring drehfest und axial beweglich in einem ortsfesten Bauteil zu halten.

Nach einer möglichen Ausgestaltung weist die Antriebseinheit eine steuerbare Antriebsquelle, und ein Kraftübertragungsvorrichtung zur Übertragung einer von der Antriebsquelle erzeugten Kraft auf die Rampeneinheit auf. Die Kraftübertragungsvorrichtung weist ein von der Antriebsquelle drehend antreibbares Antriebsritzel und eine mit dem ersten Ring fest verbundene Verzahnung auf, mit der das Antriebsritzel in Verzahnungseingriff ist.

Es ist zumindest ein Federelement vorgesehen, das der durch die Antriebseinheit erzeugten axialen Bewegungsrichtung entgegenwirkt, das heißt den zweiten Ring in Richtung zum ersten Ring beaufschlagt. Das Federelement kann insofern auch als Rückstellfeder bezeichnet werden.

Nach einer möglichen Ausgestaltung kann zumindest einer der Ringe, das heißt der erste Ring und/oder der zweite Ring, in axialer Richtung hinterschnittfrei gestaltet sein. Eine axial hinterschnittfreie Kontur ermöglicht eine einfache und kostengünstige Herstellung des jeweiligen Rings im Wege eines Formverfahrens, beispielsweise durch einen Press-, Präge oder Sinterprozess.

Die Lösung der Aufgabe besteht weiter in einer Kupplungsanordnung für einen Antriebsstrang eines Kraftfahrzeugs umfassend eine Trennkupplung zum Abschalten des Antriebsstrangs und eine Aktuatoranordnung, die nach zumindest einer der obigen Ausführungsformen gestaltet ist. Die Trennkupplung weist zumindest ein erstes Kupplungsteil und ein zweites Kupplungsteil auf, wobei ein Federelement vorgesehen ist, das die Trennkupplung in eine Schließstellung beaufschlagt, in der Drehmoment zwischen dem ersten Kupplungsteil und dem zweiten Kupplungsteil übertragbar ist; wobei die Rampeneinheit zum Beaufschlagen der Trennkupplung in eine Offenstellung angeordnet ist; wobei der zweite Ring mit einem von dem ersten oder zweiten Kupplungsteil zusammenwirkt, um diese bei Betätigung der Antriebseinheit außer Eingriff voneinander zu bringen.

Die erfindungsgemäße Kupplungsanordnung hat den Vorteil, dass zur Betätigung nur geringe Kräfte erforderlich sind, so dass auch die Antriebseinheit der Rampenanordnung hinsichtlich der Nennleistung entsprechend klein dimensioniert werden kann, was sich günstig auf den benötigten Bauraum und das Gewicht auswirkt.

Die Zuordnung der axialen Endstellungen der Rampenanordnung zu den Schaltstellungen der Kupplung ist vorzugsweise so, dass die erste Endstellung der Rampenanordnung, in welcher die beiden Ringe aneinander angenähert sind, die Schließstellung der Kupplung definiert. Entsprechend definiert die zweite Endstellung der Rampenanordnung, in welcher die beiden Ringe voneinander entfernt sind, die Offenstellung der Trennkupplung. Ein von der Antriebseinheit in den drehend antreibbaren Ring eingeleitetes Drehmoment bewirkt ein Auseinanderfahren der Rampeneinheit gegen die Kraft des Federelements, welche entsprechend potentielle Energie speichert. Der axial bewegliche zweite Ring wird bei Betätigung der Antriebseinheit in eine erste axiale Richtung bewegt, während die Federmittel den axial beweglichen Ring in entgegengesetzter zweiter axialer Richtung beaufschlagen.

Die Kupplung kann nach einer Ausführungsform als Formschlusskupplung gestaltet sein. Hiermit sind Kupplungen gemeint, bei denen eine Drehmomentübertragung durch formschlüssiges Ineinandergreifen von zumindest zwei Kupplungsteilen erfolgt. Als Beispiele für formschlüssige Kupplungen seien hier Klauenkupplungen, Schiebemuffen-Kupplungen oder Zahnkupplungen genannt. Durch Schließen der Kupplung wird erreicht, dass ein mit dem ersten Kupplungsteil verbundenes Antriebsteil und ein mit dem zweiten Kupplungsteil verbundenes Abtriebsteil gemeinsam rotieren, während sie in geöffneten Zustand frei gegeneinander drehbar sind. Alternativ kann die Kupplung auch in Form einer Reibungskupplung gestaltet sein, welche zur Drehmomentübertragung zumindest eine zwischen dem ersten Kupplungsteil und dem zweiten Kupplungsteil wirksame Reibflächenpaarung aufweist. Als Beispiel für eine Reibungskupplung wird hier insbesondere eine Reiblamellenkupplung genannt, die mit dem ersten Kupplungsteil drehfest und axial beweglich verbundene erste Reiblamellen und mit dem zweiten Kupplungsteil drehfest und axial beweglich verbundene zweite Reiblamellen aufweist. Durch axiales Beaufschlagen des aus den ersten und zweiten Reiblamellen gebildeten Lamellenpakets erfolgt ein Angleichen der Drehbewegung zwischen den beiden Kupplungsteilen. Eine Reibungskupplung ermöglicht, dass das übertragbare Drehmoment variabel nach Bedarf eingestellt werden kann, da auch beliebige Zwischenstellungen zwischen der Schließstellung, in der die beiden Kupplungsteile gemeinsam drehen, und der Offenstellung, in der die beiden Kupplungsteile frei gegeneinander drehbar sind, einstellbar sind. Für beide Ausführungsformen gilt vorzugsweise, dass ist die Kupplung generell in Schließstellung beaufschlagt ist und ein Trennen der Kupplung durch externe Betätigung erfolgt. Bei dieser Ausführung kann die Kupplung auch als Trennkupplung bezeichnet werden. Es versteht sich jedoch, dass auch eine kinematische Umkehrung möglich ist, das heißt die Kupplung von der der Rampenanordnung im Schließsinn beaufschlagt wird.

Nach einer Weiterbildung kann eine Bremseinheit zum Abbremsen eines mit dem ersten oder zweiten Kupplungsteil verbundenen Antriebsstrangabschnitts vorgesehen sein. Die Bremseinheit wird von der Rampenanordnung betätigt, insbesondere mittels der zweiten Steigungsabschnitte des zweiten Rings. Die Bremseinheit kann ein mit dem beweglichen Kupplungsteil fest verbundenes Bremsenteil aufweisen sowie ein mit einem ortsfesten Bauteil verbundenes zweites Bremsenteil. Die beiden Bremsenteile werden durch Auseinanderfahren der Rampeneinheit miteinander in Reibkontakt gebracht, wobei gegebenenfalls ein oder mehrere Reibscheiben zwischen den Bremsenteilen angeordnet sein können. Durch Reibschluss zwischen den Bremsenteilen wird das axial bewegliche Kupplungsteil bis zum Stillstand verzögert. Somit stehen alle mit dem Kupplungsteil antriebsverbundenen Teile des Antriebsstranges still.

Ein Verfahren zur Steuerung der Kupplungsanordnung kann folgende Schritte umfassen: Öffnen der Formschlusskupplung durch Betätigung der Antriebseinheit in eine erste Betätigungsrichtung, wobei der axial bewegliche Ring mindestens in die Zwischenrastposition bewegt wird; Bremsen der mit dem zweiten Kupplungsteil verbundenen Antriebswelle, wenn das erste Kupplungsteil und das zweite Kupplungsteil außer Eingriff sind, dadurch, dass der axial bewegliche Ring über die Zwischenrastposition hinaus vom axial abgestützten Ring wegbewegt wird; Deaktivieren der Antriebseinheit, wobei der axial bewegliche Ring in der Zwischenrastposition mit Abstand relativ zum axial abgestützten Ring gehalten wird, so dass die Formschlusskupplung geöffnet bleibt; Schließen der Formschlusskupplung durch Betätigung der Antriebseinheit in eine entgegengesetzte zweite Betätigungsrichtung, wobei der axial bewegliche Ring aus der Zwischenrastposition herausbewegt wird und mittels der Rückstellfeder in Richtung zum axial abgestützten Ring beaufschlagt wird.

Die beschriebene Kupplungsanordnung mit Rampeneinheit erzeugt bei Betrieb nur geringe Reibkräfte und hat eine geringe Hysterese. Damit erlaubt die Kupplungsanordnung eine sehr einfache Ansteuerung durch einen relativ kleinen Elektromotor, der für die Bereitstellung vergleichbarer Axialkräfte nur geringe Antriebsmomente benötigt.

Die genannte Kupplungsanordnung kann insbesondere im Antriebsstrang eines Kraftfahrzeugs verwendet werden, um eine Drehmomentübertragung auf eine optional antreibbare Antriebsachse bei Bedarf zu unterbrechen ("Disconnect"-Prinzip). Nach einer möglichen Ausführungsform kann die Kupplungsanordnung in eine Abtriebsanordnung (Power Takeoff Unit, PTU) oder ein Verteilergetriebe integriert sein.

Bevorzugte Ausführungsformen werden nachstehend anhand der Zeichnungsfiguren erläutert. Hierin zeigt:
- Figur 1: eine erfindungsgemäße Aktuatoranordnung
A) in einer ersten perspektivischen Explosionsdarstellung;
B) in einer zweiten perspektivischen Explosionsdarstellung;
C) in einer dritten perspektivischen Explosionsdarstellung;
- Figur 2: eine erfindungsgemäße Kupplungsanordnung mit der erfindungsgemäßen Aktuatoranordnung aus Figur 1
A) in perspektivischer Explosionsdarstellung;
B) im Längsschnitt in Schließstellung;
C) im Längsschnitt in Offenstellung.

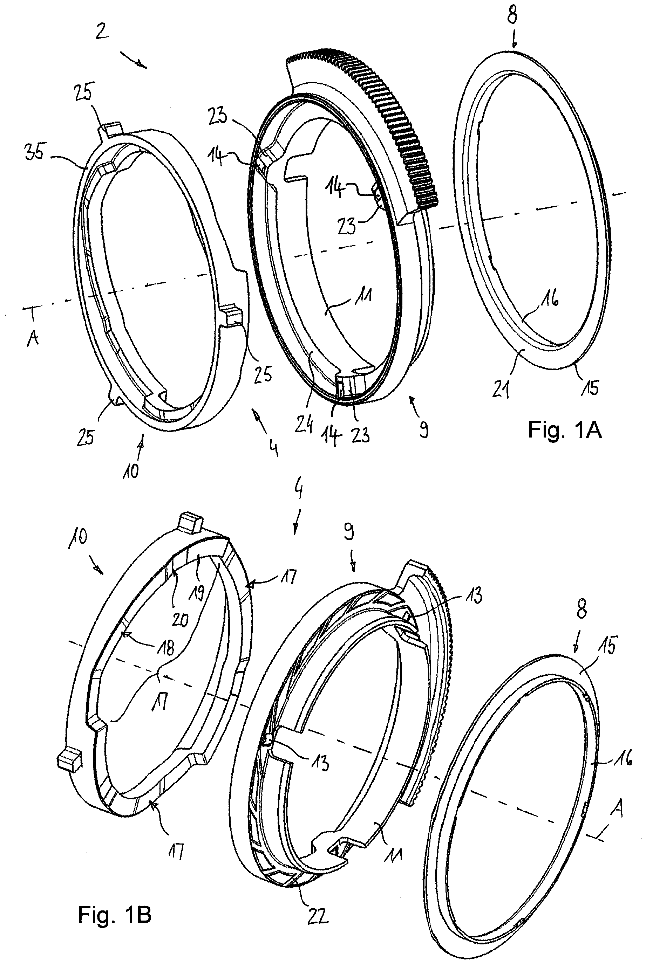

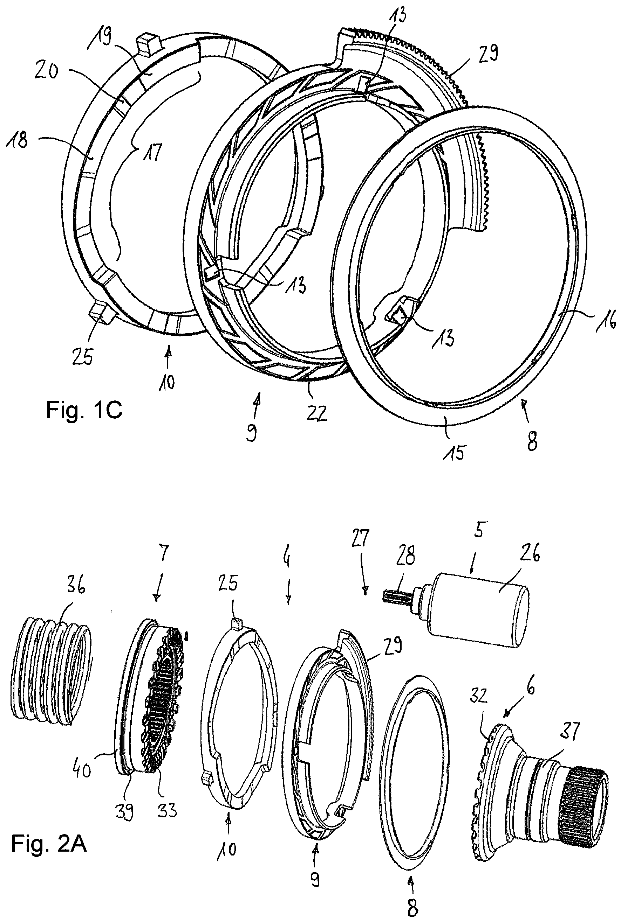

Die Figuren 1A bis 1C sowie 2A bis 2C werden nachstehend gemeinsam beschrieben. In den Figuren 1A bis 1C ist eine Aktuatoranordnung 2 mit einer Rampeneinheit 4 und einer steuerbare Antriebseinheit 5 zum Steuern der Rampeneinheit 4 gezeigt. Die Aktuatoranordnung 4 dient insbesondere zum Betätigen einer Kupplung 3 im Antriebsstrang eines Kraftfahrzeugs, die ein erstes Kupplungsteil 6 und ein zweites Kupplungsteil 7 aufweist, die zumindest in eine Schließstellung und eine Offenstellung überführbar sind.

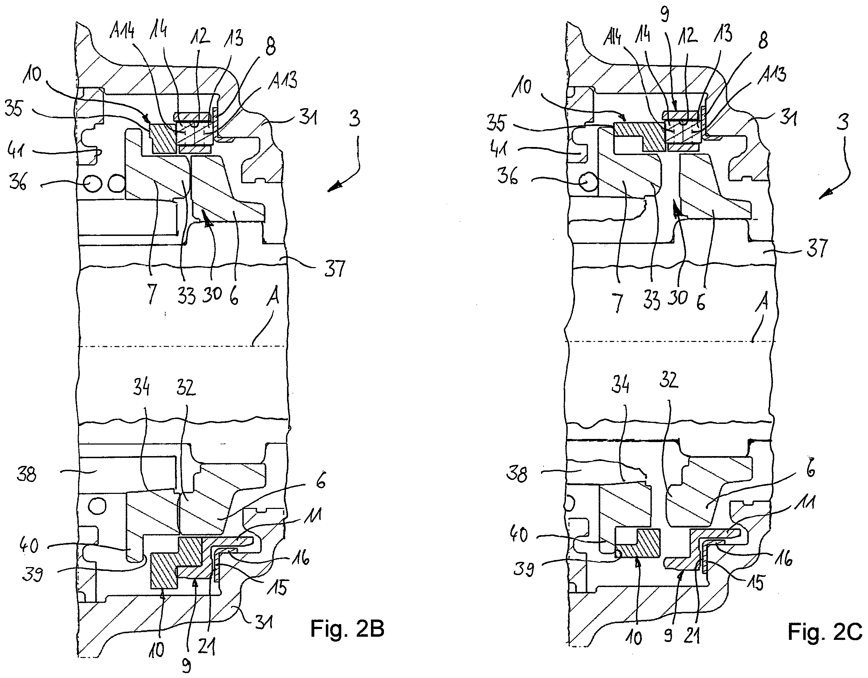

Die Rampeneinheit 4 umfasst ein Anlaufelement in Form einer Anlaufscheibe 8, einen ersten Ring 9 und einen zweiten Ring 10. Der erste Ring 9 ist von der Antriebseinheit um eine Drehachse A drehend antreibbar und weist mehrere über den Umfang verteilte axiale Durchgangsöffnungen 12 auf. In jeder der axialen Durchgangsöffnungen 12 sind zwei Rollkörper 13, 14 aufgenommen, die in axiale Richtung gegeneinander abgestützt sind und gemeinsam ein Paar bilden. Die Rollenkörper 13, 14, die kurz auch als Rollen bezeichnet werden, sind in Form von in Form von Zylinderrollen gestaltet. Die Rollen sind axial benachbart zueinander in einer gemeinsamen Längsebene angeordnet, welche in der oberen Bildhälfte der Figur 2B der Zeichenebene entspricht. Die erste Rolle 13 ist um eine erste Rollenachse A13 drehbar und die zweite Rolle 14 ist um eine zweite Rollenachse A14 drehbar. Dabei ist insbesondere in Figur 2B erkennbar, dass die beiden Rollenachsen A13, A14 parallel zueinander und radial zur Drehachse A des ersten Rings 13 verlaufen.

Jeweils ein erster Rollkörper 13 ist gegen die Anlaufscheibe 8 axial abgestützt ist und mit dieser in abwälzendem Kontakt. Konkret ist insbesondere vorgesehen, dass die Anlaufscheibe 8 einen Flanschabschnitt 15 aufweist, der eine vorzugsweise ebene, radiale Stützfläche 21 bildet, gegen welche die ersten Rollenkörper 13 axial abgestützt sind. Bei Verdrehen des ersten Ringes 9 um die Drehachse A wälzen die ersten Rollenkörper 13 auf der Stützfläche 21 der Anlaufscheibe 8 ab und drehen jeweils um ihre individuellen Rollenachsen A13. Die Anlaufscheibe 8 kann ferner einen Hülsenabschnitt 16 aufweisen, der insbesondere zur Zentrierung der Anlaufscheibe 8 auf eine Schulter eines ortsfesten Gehäuses 31 umgreifen kann. Die Anlaufscheibe 8 ist aus einem verschleißfesten Werkstoff hergestellt, beispielsweise aus einem Stahlwerkstoff.

Die zweite Rolle 14 ist einerseits gegen die erste Rolle 13 und andererseits gegen den zweiten Ring 10 axial abgestützt. Auf diese Weise ist der zweite Ring 10 mittelbar über die Paare von Rollen 13, 14 gegen die Anlaufscheibe 8 axial abgestützt. Die Paare von ersten und die zweiten Rollenkörpern 13, 14 sitzen jeweils lose mit Spiel in den Durchgangsöffnungen 12 ein. Dabei ist das Radialspiel und Spiel in Umfangsrichtung möglichst klein, um ungewünschte Geräusche zu vermeiden.

Es ist insbesondere vorgesehen, dass der erste Ring 9 an seiner der Anlaufscheibe 8 zugewandten Seite eine ebene Radialfläche 22 hat, wobei die ersten Rollen 13 in montiertem Zustand gegenüber dieser Radialfläche 22 axial vorstehen. An seiner dem zweiten Ring 10 zugewandten Seite hat der erste Ring 9 mehrere axiale Erhebungen 23 beziehungsweise Verdickungen, in denen die Durchgangsöffnungen 12 gebildet sind. Diese verdickten Lagerbereiche, in denen die Rollkörper 13, 14 aufgenommen sind, weisen in Richtung zum zweiten Ring 10 und stehen gegenüber einer insbesondere ebenen Radialfläche 24 des zweiten Ringes 10 axial hervor.

Insgesamt hat der erste Ring 9 die Funktion eines Käfigs, in dem die Rollkörper 13, 14 drehbar aufgenommen sind. Dabei überträgt der erste Ring 9 eine von der Antriebsquelle eingeleitete Drehbewegung auf die Rollkörper 13, 14, welche gemeinsam mit dem ersten Ring 9 um die Drehachse A umlaufen. An der axialen Kraftübertragung zwischen dem zweiten Ring 10 und der Anlaufscheibe 8 über die Rollkörper 13, 14 nimmt der erste Ring 9 nicht teil. Bei Betätigen der Rampenanordnung, das heißt Verdrehen des ersten Rings 9, wälzen die ersten Rollenkörper 13 an der Anlaufscheibe 8 ab, die zweiten Rollenkörper 14 wälzen an den ersten Rollenkörpern 13 ab und die Rampenflächen des zweiten Rings 10 wälzen an den zweiten Rollenkörpern 14 ab.

Der zweite Ring 10 ist koaxial zum ersten Ring 9 angeordnet und ist ausgestaltet, um in einem ortfesten Bauteil, beispielsweise einem Kupplungs- beziehungsweise einem Getriebegehäuse 31, drehfest und axial beweglich gehalten zu werden. Hierfür hat der zweite Ring 10 entsprechende Verdrehsicherungsmittel, die vorliegend in Form von mehreren über den Umfang verteilten radialen Vorsprüngen 25 gestaltet sind. Die radialen Vorsprünge 25 können in entsprechende Führungsnuten in einem Gehäuse 31 eingreifen, so dass der zweite Ring 10 drehfest und axial beweglich im Gehäuse gehalten ist.

Der zweite Ring 10 hat mehrere über den Umfang verteilte und sich in Umfangsrichtung erstreckende Rampen 17, die jeweils mit einer zugehörigen zweiten Rolle 13 zusammenwirken. Die Konturen der Rampen 17 sind derart gestaltet, dass ein drehendes Antreiben des ersten Rings 9 mittels der Antriebseinheit 5 eine axiale Bewegung des zweiten Rings 10 relativ zum ersten Ring bewirkt. Konkret ist vorgesehen, dass die Rampen wenigstens einen Teilabschnitt mit einer axialen Steigungskomponente aufweisen. Durch die axiale Steigung rollen die Rollkörper 13, 14 beim Verdrehen des zweiten Rings 10 relativ zum ersten Ring 9 entlang der Rampen 17 ab, so dass der zweite Ring 10 relativ zum ersten Ring 9 axial bewegt wird.

Bei der vorliegenden Ausführungsform sind genau drei Rampen 17 vorgesehen, die regelmäßig über den Umfang verteilt sind und sich jeweils in Umfangsrichtung über weniger als 120° erstrecken. Damit der zweite Ring 10 beim Betätigen stets in paralleler Anordnung zum ersten Ring 9 bleibt, sind die Rampen 17 untereinander gleich gestaltet. Ferner sind die Rampen 17 so gestaltet, dass eine erste Endstellung definiert ist, in der zweite Ring 10 an den ersten Ring 9 angenähert ist, so dass die Ringe 9, 10 einen geringsten axialen Abstand zueinander aufweisen, sowie eine zweite Endstellung, in der zweite Ring 10 vom ersten Ring 9 axial beabstandet ist, beziehungsweise, in der die beiden Ringe 9, 10 den größten axialen Abstand zueinander aufweisen.

Die Rampen 17 haben ausgehend von der tiefsten Stelle, welche die erste Endstellung definiert, einen ersten Abschnitt 18 mit einer ersten Steigung sowie einen zweiten Abschnitt 19 mit einer zweiten Steigung. Die Steigung des zweiten Abschnitts 18 ist geringfügig kleiner als die Steigung des ersten Abschnitts 18, wobei es sich versteht, dass sich die Steigungen nach dem technischen Bedarf richten und auch beliebig anders gestaltet sein können. Zwischen dem ersten Abschnitt 18 und dem zweiten Abschnitt 19 ist ein Zwischenabschnitt 20 vorgesehen, welcher eine Rastposition definiert. In der Rastposition, das heißt wenn die zweiten Rollen 14 in den Zwischenabschnitten 20 liegen, werden die beiden Ringe 9, 10 in einem definierten axialen Abstand relativ zueinander gehalten. Diese Ausgestaltung mit rastenden Zwischenabschnitten 20 ermöglicht, dass die Kupplung 3 zwischen der voll geschlossenen Schließstellung und der voll geöffnete Offenstellung eine Zwischenstellung mit definiertem axialem Abstand einnehmen kann. Die Kontur der Zwischenabschnitte 20 ist so gestaltet, dass die beiden Ringe 9, 10 in der Zwischenstellung selbstständig gehalten werden, auch wenn die Antriebseinheit 5 deaktiviert ist und gegebenenfalls trotz einer Kraftbeaufschlagung des zweiten Rings 10 in Richtung erstem Ring 9 mittels einer Feder.

Die Antriebseinheit 5 für die Rampeneinheit 4 ist ausgestaltet, um den ersten Ring 9 drehend anzutreiben, so dass dieser gegenüber dem ersten Ring 9 verdreht wird. Es ist vorgesehen, dass die Antriebseinheit 5 eine steuerbare Antriebsquelle 26 und eine Kraftübertragungsvorrichtung 27 zur Übertragung einer von der Antriebsquelle 26 erzeugten Kraft auf die Rampeneinheit 4 aufweist. Die Antriebsquelle 26 ist in Form eines Elektromotors gestaltet, insbesondere in Form eines Gleichstrommotors. Der Elektromotor ist mittels einer elektronischen Regeleinheit (ECU) ansteuerbar (nicht dargestellt).

Die Kraftübertragungsvorrichtung 27 weist ein Antriebsteil 28 auf, das bei der vorliegenden Ausführungsform als Antriebsritzel gestaltet ist und mit einer Außenverzahnung 29 am ersten Ring 9 zur Drehmomentübertragung in Verzahnungseingriff ist. Ein Antreiben des ersten Rings 9 bewirkt eine Relativverdrehung gegenüber dem drehfest gehaltenen zweiten Ring 10, so dass die zweiten Rollenkörper 14 entlang der Rampen 17 in tiefere Bereiche laufen und der zweite Ring 10 in Richtung vom ersten Ring 9 weg axial verschoben wird. Zum erneuten Rückstellen des zweiten Rings 10 in Richtung erstem Ring 9 ist eine Feder 36 vorgesehen, welche eine Vorspannkraft auf den zweiten Ring 10 in Richtung zum ersten Ring 9 ausübt.

Die Figuren 2A bis 2C zeige eine Kupplungsanordnung 30 mit einer Kupplung 3 und einer erfindungsgemäßen Rampenanordnung 4 zum Betätigen der Kupplung 3.

Die Kupplung 3 ist als Formschlusskupplung gestaltet und kann auch als Trennkupplung bezeichnet werden, wobei das erste Kupplungsteil 6 ein an einer Stirnfläche ein erstes Eingriffsprofil 32 aufweist, das in der Schließstellung der Kupplung 3 in ein gegengleiches zweites Eingriffsprofil 33 des zweiten Kupplungsteils 7 zur Drehmomentübertragung eingreift. Die Eingriffsprofile 32, 33 der ersten und zweiten Kupplungsteil 6, 7 sind in Form von Stirnverzahnungen gestaltet. Figur 2B zeigt die Kupplung 3 in einer Schließstellung, in der das zweite Kupplungsteil 7 an das erste Kupplungsteil 6 angenähert ist, so dass die Eingriffsprofile der Kupplungsteile zur Drehmomentübertragung ineinandergreifen. In Figur 2C ist das zweite Kupplungsteil 7 in Richtung vom ersten Kupplungsteil 6 weg bewegt und befindet sich in Offenstellung, in der der Verzahnungseingriff zwischen den beiden Kupplungsteilen 6, 7 unterbrochen ist. In dieser Stellung ist das zweite Kupplungsteil 7 gegenüber dem ersten Kupplungsteil 6 axial verschoben, so dass die Kupplungsteile 6, 7 relativ zueinander frei drehen können, das heißt, eine Drehmomentübertragung unterbrochen ist.

Das erste Kupplungsteil 6 kann drehfest und axial fest mit einer Antriebswelle 37 verbunden werden, beispielsweise mittels eine Wellenverzahnung und einem Dichtungsring oder auch einteilig mit einer Antriebswelle gestaltet sein. Der erste Ring 9 ist mit seinem hülsenförmigen Zentrierabschnitt 11 auf einer Außenfläche des ersten Kupplungsteils 6 zentriert. Das zweite Kupplungsteil 7 ist ringförmig gestaltet und hat eine innere Wellenverzahnung 34, in die ein Anschlussbauteil 38 zur Drehmomentübertragung in Eingriff bringbar ist.

Die Rampenanordnung 4 ist zum Öffnen der Kupplung 3 ausgestaltet, wobei es sich versteht, dass diese nach einer alternativen Ausführungsform auch zum Schließen einer Kupplung gestaltet sein kann. Die Antriebseinheit 5 der Rampenanordnung 4 wirkt entsprechend in entgegengesetzter Richtung der Feder 36, welche die beiden Kupplungsteile 6, 7 in Eingriffsstellung axial beaufschlagt. Dabei ist ein erstes Federende an dem zweiten Kupplungsteil 7 axial abgestützt, während ein zweites Federende an einem axial unverschieblichen Bauteil axial abgestützt werden kann.

Der zweite Ring 10 hat eine Stützfläche 35, gegen die das zweite Kupplungsteil 7 mit einer Anlagefläche 39 axial abgestützt ist. Hierfür hat das zweite Kupplungsteil 7 eine Kragen oder radialen Vorsprung, gegen die der zweite Ring 10 axial abgestützt ist. Ausgehend von der Schließstellung der Kupplung 3 bewirkt ein Betätigen der Antriebseinheit 5, dass der zweite Ring 10 axial von der Anlaufscheibe 8 beziehungsweise vom ersten Ring 9 weg bewegt wird. Entsprechend beaufschlagt der zweite Ring 10 das zweite Kupplungsteil gegen die Vorspannkraft der Feder 36 vom ersten Kupplungsteil 6 weg, so dass die Kupplung 3 geöffnet wird. Ein erneutes Schließen der Kupplung 3 erfolgt durch Deaktivieren der Antriebseinheit 5 beziehungsweise zumindest kurzzeitiges Betätigung der Antriebseinheit 5 in entgegengesetzter Richtung aus der Zwischenstellung heraus. Dabei wird die Kupplung 3 mittels der Feder 36 geschlossen, die das zweite Kupplungsteil 7 wieder in Richtung zum ersten Kupplungsteil 6 beaufschlagt.

Zusätzlich zu den Funktionen Koppeln und Entkoppeln eines Antriebsstrangs mittels der Kupplung 3 kann die vorliegende Kupplungsanordnung 2 eine weitere Funktion wahrnehmen, und zwar insbesondere das Abbremsen eines mit dem zweiten Kupplungsteil 7 verbundenen Antriebsstrangabschnitts. Hierfür kann eine Bremseinheit vorgesehen sein (nicht dargestellt) mit einem ersten Bremsenteil, das mit dem zweiten Kupplungsteil 8 fest verbindbar ist, sowie einem zweiten Bremsenteil, das mit dem ortsfesten Gehäuse fest verbindbar ist. Durch axiales Beaufschlagen des zweiten Kupplungsteils 7 vom ersten Kupplungsteil 6 weg, wird das mit dem zweiten Kupplungsteil 7 verbundene und gemeinsam mit diesem rotierende Bremsenteil 40 gegen das ortsfeste Bremsenteil 41 beaufschlagt. Durch Reibschluss zwischen den Bremsenteilen wird das erste Bremsenteil bis zum Stillstand verzögert. Somit stehen alle mit dem Bremsenteil 40 antriebsverbundenen Teile des Antriebsstranges still.

In der ersten Endposition der Antriebseinheit 5 befinden sich die zweiten Rollkörper 14 in der tiefsten Stelle des ersten Abschnitts 18 der Stellkontur, so dass die beiden Ringe 9, 10 axial aneinander angenähert sind. In diesem Schaltzustand, welcher in Figur 2B dargestellt ist, ist die Kupplung 3 geschlossen (connect mode). Durch relatives Verdrehen des ersten Rings 9 in der ersten Drehrichtung wandern die zweiten Kugeln 14 am ersten Steigungsabschnitt 18 entlang, so dass der zweite Ring 10 axial vom ersten Ring 9 weg beaufschlagt wird. Dabei wird das zweite Kupplungsteil 7, an dem der zweite Ring 10 axial abgestützt ist, vom ersten Kupplungsteil 6 weg beaufschlagt, so dass die Kupplung 3 geöffnet wird. Ein vollständig geöffneter Zustand ist erreicht, wenn die zweiten Rollenkörper 14 jeweils die Zwischenabschnitte 20 erreicht haben. In diesem Zustand, der in Figur 2C gezeigt ist, ist die Kupplung 3 und gegebenenfalls die Bremse 8 geöffnet. Dieser Zustand kann auch als Freilauf (disconnect mode) bezeichnet werden. Durch weiteres Drehen des ersten Rings 9 in der ersten Drehrichtung über den Freilaufzustand hinaus wird der zweite Ring 10 zusammen mit dem zweiten Kupplungsteil 7 und dem damit verbundenen ersten Bremsteil 40 in Richtung zum zweiten Bremsteil 41 beaufschlagt. Dies geschieht dadurch, dass die zweiten Rollenkörper 14 in den zweiten Steigungsabschnitten 19 entlang rollen. Dabei kommen die beiden Bremsenteile 40, 41 in Reibkontakt miteinander, so dass das drehende Bremsenteil 40 zusammen mit den hier antriebsverbundenen Bauteilen gegenüber dem stehenden Gehäuse 34 abgebremst wird. In diesem Bremszustand (brake mode) steht die mit dem zweiten Kupplungsteil 7 verbundene Antriebswelle 38 still und überträgt kein Drehmoment. Durch die Ausgestaltung der Rampenanordnung 4 in der genannten Form ist gewährleistet, dass die Bremse (40, 41) erst geschlossen wird, wenn die Kupplung 3 vollständig geöffnet ist.

### Bezugszeichenliste

- 2: Aktuatoranordnung
- 3: Kupplung
- 4: Rampeneinheit
- 5: Antriebseinheit
- 6: erstes Kupplungsteil
- 7: zweites Kupplungsteil
- 8: Anlaufscheibe
- 9: erster Ring
- 10: zweiter Ring
- 11: Zentrierabschnitt
- 12: Durchgangsöffnung
- 13: erster Rollkörper
- 14: zweiter Rollkörper
- 15: Flanschabschnitt
- 16: Hülsenabschnitt
- 17: Rampe
- 18: erster Abschnitt
- 19: zweiter Abschnitt
- 20: Zwischenabschnitt
- 21: Stützfläche
- 22: Radialfläche
- 23: Erhebung
- 24: Radialfläche
- 25: Verdrehsicherungselemente
- 26: Antriebsquelle
- 27: Kraftübertragungsvorrichtung
- 28: Antriebsteil
- 29: Außenverzahnung
- 30: Kupplungsanordnung
- 31: Gehäuse
- 32: Eingriffsprofil
- 33: Eingriffsprofil
- 34: Wellenverzahnung
- 35: Stützfläche
- 36: Feder
- 37: Antriebswelle
- 38: Anschlussbauteil
- 39: Anlagefläche
- 40: erstes Bremsenteil
- 41: zweites Bremsenteil

- A: Drehachse

## Patentansprüche

1. Aktuatoranordnung zur Betätigung einer Kupplung im Antriebsstrang eines Kraftfahrzeugs, umfassend:
eine Antriebseinheit (5) zum Erzeugen einer Betätigungskraft und
eine Rampeneinheit (4), die von der Antriebseinheit (5) antreibbar ist und das ein Anlaufelement (8), einen ersten Ring (9) und einen zweiten Ring (10) aufweist,
wobei der erste Ring (9) von der Antriebseinheit (5) um eine Drehachse (A) drehend antreibbar ist,
wobei der zweite Ring (10) ausgestaltet ist, um in einem ortfesten Bauteil drehfest und axial beweglich gehalten zu werden und mehrere über den Umfang verteilte Rampen (17) aufweist,
wobei die Rampen (17) derart gestaltet sind, dass ein drehendes Antreiben des drehend antreibbaren ersten Rings (9) mittels der Antriebseinheit (5) eine axiale Bewegung des zweiten Rings (10) relativ zum ersten Ring (9) bewirkt **dadurch gekennzeichnet,**
**dass** der erste Ring (9) mehrere über den Umfang verteilte axiale Durchgangsöffnungen (12) aufweist, wobei in jeder der axialen Durchgangsöffnungen (12) zwei Rollen (13, 14) angeordnet sind, die aneinander axial abgestützt sind und in Wälzkontakt miteinander stehen, von denen jeweils eine erste Rolle (13) gegen das Anlaufelement (8) axial abgestützt ist und eine zweite Rolle (14) gegen den zweiten Ring (10) axial abgestützt ist, wobei die Rampen (17) des zweiten Rings (10) jeweils mit einer zugehörigen zweiten Rolle (14) zusammenwirken.

2. Aktuatoranordnung nach Anspruch 1,
**dadurch gekennzeichnet,**
**dass** die Rampen (17) des zweiten Rings (10) so gestaltet sind, dass eine erste Endstellung definiert ist, in der zweite Ring (10) an den ersten Ring (9) axial angenähert ist,
und in eine zweite Endstellung, in der der zweite Ring (10) vom ersten Ring (9) axial weiter entfernt ist.

3. Aktuatoranordnung nach Anspruch 1 oder 2,
**dadurch gekennzeichnet,**
**dass** die Rampen (17) des zweiten Rings (10) so gestaltet sind, dass entlang des relativen Verdrehweges zwischen der ersten Endstellung und der zweiten Endstellung eine dazwischen liegende Zwischenposition vorgesehen ist, derart, dass der zweite Ring (10) in der Zwischenposition in einem definierten axialen Abstand relativ zum ersten Ring (13) gehalten wird.

4. Aktuatoranordnung nach einem der Ansprüche 1 bis 3,
**dadurch gekennzeichnet,**
**dass** die Rampen (17) des zweiten Rings (10) einen ersten Abschnitt (18) mit einer ersten Steigung und einen zweiten Abschnitt (19) mit einer zweiten Steigung aufweisen, wobei insbesondere vorgesehen ist, dass zwischen dem ersten Abschnitt (18) und dem zweiten Abschnitt (19) ein vertiefter Zwischenabschnitt (20) gebildet ist, der die Zwischenposition definiert.

5. Aktuatoranordnung nach einem der Ansprüche 1 bis 4,
**dadurch gekennzeichnet,**
**dass** die ersten und zweiten Rollen (13, 14) in Form von Zylinderrollen gestaltet sind, welche axial benachbart zueinander angeordnet sind, wobei die erste Rolle (13) um eine erste Rollenachse (A13) drehbar ist und die zweite Rolle (14) um eine zweite Rollenachse (A14) drehbar ist, wobei die erste und zweite Rollenachse parallel zueinander und radial zur Drehachse (A) des ersten Rings (9) verlaufen.

6. Aktuatoranordnung nach einem der Ansprüche 1 bis 5,
**dadurch gekennzeichnet,**
**dass** die Rampen (17) ebene Rampenflächen aufweisen, an denen die zweiten Rollen (14) jeweils axial abgestützt und abwälzend in Kontakt sind.

7. Aktuatoranordnung nach einem der Ansprüche 1 bis 6,
**dadurch gekennzeichnet,**
**dass** die ersten und zweiten Rollen (9, 10) jeweils lose mit Spiel in den Durchgangsöffnungen (12) angeordnet sind oder
**dass** zumindest eine von den ersten und zweiten Rollen (13, 14) in der zugehörigen Durchgangsöffnung (12) mittels eines Lagers um die Rollenachse drehbar gelagert ist.

8. Aktuatoranordnung nach einem der Ansprüche 1 bis 7,
**dadurch gekennzeichnet,**
**dass** sich die Rampen (17) des zweiten Rings (10) in Umfangsrichtung über jeweils weniger als 120° erstrecken.

9. Aktuatoranordnung nach einem der Ansprüche 1 bis 8,
**dadurch gekennzeichnet,**
**dass** der erste Ring (9) an einer dem Anlaufelement (8) zugewandten Seite eine ebene Radialfläche (22) aufweist, gegenüber der die ersten Rollen (13) in montiertem Zustand axial vorstehen, und
**dass** der erste Ring (9) an einer dem zweiten Ring (10) zugewandten Seite mehrere axiale Erhebungen (23) aufweist, in denen jeweils eine der Durchgangsöffnungen (12) vorgesehen ist.

10. Aktuatoranordnung nach einem der Ansprüche 1 bis 9,
**dadurch gekennzeichnet,**
**dass** der zweite Ring (10) Verdrehsicherungselemente (25) aufweist, um den zweiten Ring (10) drehfest und axial beweglich in einem ortsfesten Bauteil zu halten.

11. Aktuatoranordnung nach einem der Ansprüche 1 bis 10,
**dadurch gekennzeichnet,**
**dass** die Antriebseinheit (5) eine steuerbare Antriebsquelle (26), insbesondere einen Elektromotor, und ein Kraftübertragungsvorrichtung (27) zur Übertragung einer von der Antriebsquelle (26) erzeugten Kraft auf die Rampeneinheit (4) aufweist, wobei die Kraftübertragungsvorrichtung (27) ein von der Antriebsquelle (26) drehend antreibbares Antriebsritzel (28) und eine mit dem ersten Ring (9) fest verbundene Verzahnung (29) aufweist, mit der das Antriebsritzel in Verzahnungseingriff ist.

12. Aktuatoranordnung nach einem der Ansprüche 1 bis 11,
**dadurch gekennzeichnet,**
**dass** ein Federelement (36) vorgesehen ist, dass den zweiten Ring (10) axial in Richtung zum ersten Ring (9) beaufschlagt.

13. Kupplungsanordnung für einen Antriebsstrang eines Kraftfahrzeugs umfassend eine Trennkupplung (3) zum Abschalten des Antriebsstrangs und eine Aktuatoranordnung (2) nach einem der Ansprüche 1 bis 12 zum Betätigen der Trennkupplung (3),
wobei die Trennkupplung (3) zumindest ein erstes Kupplungsteil (6) und ein zweites Kupplungsteil (7) aufweist, wobei ein Federelement vorgesehen ist, das die Trennkupplung (3) in eine Schließstellung beaufschlagt, in der Drehmoment zwischen dem ersten Kupplungsteil (6) und dem zweiten Kupplungsteil (7) übertragbar ist,
wobei die Rampeneinheit (2) zum Beaufschlagen der Trennkupplung (3) in eine Offenstellung angeordnet ist, wobei der zweite Ring (10) mit einem von dem ersten oder zweiten Kupplungsteil (6, 7) zusammenwirkt, um diese bei Betätigung der Antriebseinheit (5) außer Eingriff voneinander zu bringen.

14. Kupplungsanordnung nach Anspruch 13,
**dadurch gekennzeichnet,**
**dass** die Rampen (17) des zweiten Rings (10) so gestaltet sind, dass der zweite Ring (10) an den ersten Ring (9) in der ersten Endstellung axial angenähert ist, wobei die Trennkupplung (3) in Schließstellung ist,
und der zweite Ring (10) vom ersten Ring (9) in der zweiten Endstellung axial weiter entfernt ist, wobei die Trennkupplung (3) in Offenstellung ist.

15. Kupplungsanordnung nach Anspruch 13 oder 14,
**dadurch gekennzeichnet,**
**dass** eine Bremseinrichtung zum Abbremsen eines von dem ersten und dem zweiten Kupplungsteil vorgesehen ist, wobei die Bremseinrichtung von der Antriebseinheit (5) über die Rampenanordnung (4) betätigbar ist.

16. Kupplungsanordnung nach einem der Ansprüche 13 bis 15,
**dadurch gekennzeichnet,**
**dass** die Trennkupplung (3) in Form einer Formschlusskupplung gestaltet ist, wobei das erste Kupplungsteil (6) und das zweite Kupplungsteil (7) in Schließstellung formschlüssig ineinander greifen und in Offenstellung voneinander entkoppelt sind, so dass das erste Kupplungsteil (6) und das zweite Kupplungsteil (7) relativ zueinander frei drehbar sind;
wobei die Rampeneinheit (4) mit einem von dem ersten und dem zweiten Kupplungsteil (6, 7) derart wirkverbunden ist, dass das erste und das zweite Kupplungsteil (6, 7) bei Betätigung der Rampeneinheit (4) durch die Antriebseinheit (5) voneinander weg bewegt werden.

## Claims

1. Actuator assembly for operating a clutch in the driveline of a motor vehicle, comprising:
a drive unit (5) for generating an operating force and
a ramp unit (4) which is drivable by the drive unit (5) and which comprises an abutment element (8), a first ring (9) and a second ring (10),
wherein the first ring (9) is drivable by the drive unit (5) so as to be rotatable around a rotational axis (A),
wherein the second ring (10) is configured to be held rotationally fixed and axially movable in a stationary component and comprises a plurality of circumferentially distributed ramps (17),
wherein the ramps (17) are configured such that rotatingly driving the rotatingly drivable first ring (9) by the drive unit (5) effects an axial movement of the second ring (10) relative to the first ring (9),
**characterised in**
**that** the first ring (9) comprises a plurality of circumferentially distributed axial through-openings (12), wherein in each of the axial through-openings (12) two rollers (13, 14) are arranged which are axially supported against one another and are in rolling contact with one another, of which respectively a first roller (13) is axially supported against the abutment element (8) and a second roller (14) is supported against the second ring (10), wherein the ramps (17) of the second ring (10) each cooperate with an associated second roller (14).

2. Actuator assembly according to claim 1,
**characterised in**
**that** the ramps (17) of the second ring (10) are configured such that a first end position is defined in which the second ring (10) is axially approached to the first ring,
and a second end position in which the second ring (10) is axially further away from the first ring (9).

3. Actuator assembly according to claim 1 or 2,
**characterised in**
**that** the ramps (17) of the second ring (10) are configured such that an intermediate position is provided along the relative rotational path between the first end position and the second end position, such that the second ring (10) is held in the intermediate position at a defined axial distance relative to the first ring (13).

4. Actuator assembly according to any one of claims 1 to 3,
**characterised in**
**that** the ramps (17) of the second ring (10) comprise a first portion (18) with a first gradient and a second portion (19) with a second gradient, wherein it is proposed in particular that between the first portion (18) and the second portion (19) a deepened intermediate portion (20) is provided which defines the intermediate position.

5. Actuator assembly according to any one of claims 1 to 4,
**characterised in**
**that** the first and the second rollers (13, 14) are in the form of cylindrical rollers which are arranged axially adjacent to one another, wherein the first roller (13) is rotatable around a first roller axis (A13) and the second roller is rotatable around a second roller axis (A14), wherein the first and the second roller axis extend parallel relative to one another and radially relative to the rotational axis (A) of the first ring (9).

6. Actuator assembly according to any one of claims 1 to 5,
**characterised in**
**that** the ramps (17) comprise planar ramp faces against which the second rollers (14) are respectively axially supported and in rolling contact with.

7. Actuator assembly according to any one of claims 1 to 6,
**characterised in**
**that** the first and the second rollers (9, 10) are each arranged loosely with play in the through-openings (12) or
**that** at least one of the first and the second rollers (13, 14) is supported in the associated through-opening (12) by a bearing so as to be rotatable around the roller axis.

8. Actuator assembly according to any one of claims 1 to 7,
**characterised in**
**that** the ramps (17) of the second ring (10) extend in the circumferential direction around less than 120 degrees.

9. Actuator assembly according to any one of claims 1 to 8,
**characterised in**
**that** the first ring (9), on a side facing the abutment element (8), comprises a planar radial face (22) relative to which the first rollers (13) project axially in the mounted condition, and
**that** the first ring (9), on a side facing the second ring (10), comprises a plurality of axial projections (23) in each of which one of the through-openings (12) is provided.

10. Actuator assembly according to any one of claims 1 to 9,
**characterised in**
**that** the second ring (10) comprises anti-rotation elements (25) for holding the second ring (10) rotationally fixedly and axially movably in a stationary component.

11. Actuator assembly according to any one of claims 1 to 10,
**characterised in**
**that** the drive unit (5) comprises a controllable drive source (26), in particular an electric motor, and a force transmitting device (27) for transmitting a force generated by the driving source (26) to the ramp unit (4), wherein the force transmitting device (27) comprises a driving pinion (28) rotatably drivable by the drive source (26) and a toothing (29) firmly connected to the first ring (9), which toothing engages the driving pinion.

12. Actuator assembly according to any one of claims 1 to 11,
**characterised in**
**that** a spring element (36) is provided which axially loads the second ring (10) towards the first ring (9).

13. Clutch assembly for a driveline of a motor vehicle comprising a disconnect clutch (3) for disconnecting the driveline and an actuator assembly (2) according to one of claims 1 to 12 for operating the disconnect clutch (3),
wherein the disconnect clutch (3) comprises at least a first clutch part (6) and a second clutch part (7), wherein a spring element is provided which loads the disconnect clutch (3) in a closed position in which torque is transmittable between the first clutch part (6) and the second clutch part (7),
wherein the ramp unit (2) is arranged to load the disconnect clutch in an open position, wherein the second ring (10) cooperates with one of the first or the second clutch part (6, 7) for disengaging same from each other when the drive unit (5) is operated.

14. Clutch assembly according to claim 13,
**characterised in**
**that** the ramps (17) of the second ring (10) are configured such that in the first end position the second ring (10) is axially approached to the first ring (9), wherein the disconnect clutch (3) is in the closed position,
and in the second end position the second ring (10) is axially further away from the first ring (9), wherein the disconnect clutch (3) is in the open position.

15. Clutch assembly according to claim 13 or 14,
**characterised in**
**that** a brake device is provided for braking one of the first and the second clutch part, wherein the brake device is operable by the drive unit (5) via the ramp assembly (4).

16. Clutch assembly according to any one of claims 13 to 15,
**characterised in**
**that** the disconnect clutch (3) is configured as a form-locking clutch, wherein the first clutch part (6) and the second clutch part (7), in the closed position, form-lockingly engage one another and, in the open position, are uncoupled so that the first clutch part (6) and the second clutch part (7) are rotatable relative to one another;
wherein the ramp unit (4) is effectively connected to one of the first and the second clutch part (6, 7) such that the first and the second clutch part (6, 7) are moved away from one other when the ramp unit (4) is operated by the drive unit (5).

## Revendications

1. Ensemble actionneur, destiné à actionner un embrayage dans la chaîne cinématique d'un véhicule automobile, comprenant :
un groupe d'entraînement (5), destiné à générer une force d'actionnement et
un ensemble de rampes (4), qui est susceptible d'être actionné par le groupe d'entraînement (5) et qui comporte un élément de butée (8), une première bague (9) et une deuxième bague (10),
la première bague (9) étant susceptible d'être entraînée en rotation par le groupe d'entraînement (5) autour d'un axe de rotation (A),
la deuxième bague (10) étant conçue pour être maintenue de manière solidaire en rotation et mobile en direction axiale dans un élément constitutif stationnaire et comportant plusieurs rampes (17) distribuées sur la périphérie,
les rampes (17) étant conçues de telle sorte qu'un entraînement en rotation de la première bague (9) susceptible d'être entraînée en rotation au moyen du groupe d'entraînement (5) provoque un déplacement axial de la deuxième bague (10) par rapport à la première bague (9),
**caractérisé en ce que**
la première bague (9) comporte plusieurs orifices de passage (12) axiaux distribués sur la périphérie, dans chacun des orifices de passage (12) axiaux étant placés deux galets (13, 14) qui sont axialement soutenus les uns sur les autres et qui sont en contact roulant les uns avec les autres, dont respectivement un premier galet (13) est axialement soutenu contre l'élément de butée (8) et un deuxième galet (14) est axialement soutenu contre la deuxième bague (10), les rampes (17) de la deuxième bague (10) coopérant respectivement avec un deuxième galet (14) associé.

2. Ensemble actionneur selon la revendication 1,
**caractérisé en ce que**
les rampes (17) de la deuxième bague (10) sont conçues de telle sorte que soit définie une première position extrême, dans laquelle la deuxième bague (10) est rapprochée en direction axiale de la première bague (9),
et une deuxième position extrême, dans laquelle la deuxième bague (10) est plus éloignée en direction axiale de la première bague (9).

3. Ensemble actionneur selon la revendication 1 ou 2,
**caractérisé en ce que**
les rampes (17) de la deuxième bague (10) sont conçues de telle sorte que le long du trajet de rotation relatif entre la première position extrême et la deuxième position extrême, il soit prévu une position intermédiaire située entre les deux, de telle sorte que dans la position intermédiaire, la deuxième bague (10) soit maintenue avec un écart axial défini par rapport à la première bague (13).

4. Ensemble actionneur selon l'une quelconque des revendications 1 à 3,
**caractérisé en ce que**
les rampes (17) de la deuxième bague (10) comportent un premier segment (18) pourvu d'une première pente et un deuxième segment (19) pourvu d'une deuxième pente, étant notamment prévu qu'entre le premier segment (18) et le deuxième segment (19), il soit formé un segment intermédiaire approfondi (20), qui définit la position intermédiaire.

5. Ensemble actionneur selon l'une quelconque des revendications 1 à 4,
**caractérisé en ce que**
les premiers et deuxièmes galets (13, 14) sont conçus sous la forme de galets cylindriques, lesquels sont placés au voisinage axial les uns des autres, le premier galet (13) étant rotatif autour d'un premier axe de galet (A13) et le deuxième galet (14) étant rotatif autour d'un deuxième axe de galet (A14), le premier et deuxième axes de galet s'écoulant à la parallèle l'un de l'autre et en direction radiale par rapport à l'axe de rotation (A) de la première bague (9) .

6. Ensemble actionneur selon l'une quelconque des revendications 1 à 5,
**caractérisé en ce que**
les rampes (17) comportent des surfaces de rampe planes sur lesquelles les deuxièmes galets (14) sont respectivement soutenus axialement et sont en contact roulant.

7. Ensemble actionneur selon l'une quelconque des revendications 1 à 6,
**caractérisé en ce que**
les premiers et deuxièmes galets (9, 10) sont placés respectivement de manière lâche avec un jeu dans les orifices de passage (12) ou
**en ce qu'**au moins l'un des premiers et deuxièmes galets (13, 14) est logé dans l'orifice de passage (12) associé au moyen d'un palier, en étant rotatif autour de l'axe de galet.

8. Ensemble actionneur selon l'une quelconque des revendications 1 à 7,
**caractérisé en ce que**
les rampes (17) de la deuxième bague (10) s'étendent en direction périphérique sur respectivement moins de 120 °.

9. Ensemble actionneur selon l'une quelconque des revendications 1 à 8,
**caractérisé en ce que**
sur une face dirigée vers l'élément de butée (8), la première bague (9) comporte une surface radiale (22) plane, par rapport à laquelle les premiers galets (13) débordent en direction axiale, en position montée, et sur une face dirigée vers la deuxième bague (10), la première bague (9) comporte plusieurs élévations (23) axiales dans lesquelles est prévu respectivement l'un des orifices de passage (12).

10. Ensemble actionneur selon l'une quelconque des revendications 1 à 9,
**caractérisé en ce que**
la deuxième bague (10) comporte des éléments de blocage en rotation (25), pour maintenir la deuxième bague (10) de manière solidaire en rotation et en étant mobile en direction axiale dans un élément constitutif stationnaire.

11. Ensemble actionneur selon l'une quelconque des revendications 1 à 10,
**caractérisé en ce que**
le groupe d'entraînement (5) comporte une source d'entraînement (26) contrôlable, notamment un moteur électrique, et un dispositif de transmission de force (27), destiné à transmettre une force générée par la source d'entraînement (26) sur l'ensemble de rampes (4), le dispositif de transmission de force (27) étant un pignon d'entraînement (28) susceptible d'être entraîné en rotation par la source d'entraînement (26) et une denture (29) fixement assemblée avec la première bague (9), avec laquelle le pignon d'entraînement est en engrènement.

12. Ensemble actionneur selon l'une quelconque des revendications 1 à 11,
**caractérisé**
**en ce qu'**il est prévu un élément à ressort (36) qui contraint la deuxième bague (10) en direction axiale, vers la première bague (9).

13. Ensemble d'embrayage, destiné à une chaîne cinématique d'un véhicule automobile, comprenant un embrayage de séparation (3), destiné à mettre à l'arrêt la chaîne cinématique et un ensemble actionneur (2) selon l'une quelconque des revendications 1 à 12, destiné à actionner l'embrayage de séparation (3),
l'embrayage de séparation (3) comportant au moins une première pièce d'embrayage (6) et une deuxième pièce d'embrayage (7), un élément à ressort étant prévu qui contraint l'embrayage de séparation (3) dans une position de fermeture dans laquelle un couple est transmissible entre la première pièce d'embrayage (6) et la deuxième pièce d'embrayage (7),
pour contraindre l'embrayage de séparation (3), l'ensemble de rampes (2) étant placé dans une position d'ouverture, la deuxième bague (10) coopérant avec l'une parmi la première et la deuxième pièces d'embrayage (6, 7) pour les ramener hors d'engagement mutuel, lors de l'actionnement du groupe d'entraînement (5).

14. Ensemble d'embrayage selon la revendication 13,
**caractérisé en ce que**
les rampes (17) de la deuxième bague (10) sont conçues de telle sorte que dans la première position extrême, la deuxième bague (10) soit rapprochée de la première bague (9) en direction axiale, l'embrayage de séparation (3) étant en position de fermeture,
et que dans la deuxième position extrême, la deuxième bague (10) soit plus éloignée de la première bague (9) en direction axiale, l'embrayage de séparation (3) étant en position d'ouverture.

15. Ensemble d'embrayage selon la revendication 13 ou 14,
**caractérisé**
**en ce qu'**il est prévu un système de freinage, destiné à freiner l'une parmi la première et la deuxième pièces d'embrayage, le système de freinage étant susceptible d'être actionné par le groupe d'entraînement (5) par l'intermédiaire de l'ensemble de rampes (4).

16. Ensemble d'embrayage selon l'une quelconque des revendications 13 à 15,
**caractérisé en ce que**
l'embrayage de séparation (3) est conçu sous la forme d'un embrayage par complémentarité de forme, en position de fermeture, la première pièce d'embrayage (6) et la deuxième pièce d'embrayage (7) s'engrenant par complémentarité de forme et dans la position d'ouverture, étant désaccouplées l'une de l'autre, de telle sorte que la première pièce d'embrayage (6) et la deuxième pièce d'embrayage (7) soient librement rotatives l'une par rapport à l'autre ;
l'ensemble de rampes (4) étant en liaison active avec l'une parmi la première et la deuxième pièces d'embrayage (6, 7) de telle sorte que, lors de l'actionnement de l'ensemble de rampes (4) par le groupe d'entraînement (5), la première et la deuxième pièces d'embrayage (6, 7) soient déplacées en éloignement l'une de l'autre.
